# EUROPÄISCHE PATENTSCHRIFT

(11) **EP 2 210 829 B1**
(45) Veröffentlichungstag und Bekanntmachung des Hinweises auf die Patenterteilung: **10.07.2013**
(21) Anmeldenummer: 10000630.3
(22) Anmeldetag: 22.01.2010
(51) Int. Cl.: B65G 15/14, B65G 15/18

(54) **Steilbandförderer**
Inclined belt conveyer
Transporteur à courroies incliné

(30) Priorität: 26.01.2009 DE 102009006136
(43) Veröffentlichungstag der Anmeldung: 28.07.2010
(73) Patentinhaber: VHV Anlagenbau GmbH, 48477 Hörstel (DE)
(72) Erfinder: Verlage, Bernhard, 48477 Riesenbeck (DE)
(74) Vertreter: Pott, Ulrich

(56) Entgegenhaltungen:
- DE-U1-202006 007 635
- JP-A- 1 043 407
- JP-A- 10 226 411

## Beschreibung

Die Erfindung betrifft einen Gurtförderer in Form eines Steilbandförderers gemäß dem Oberbegriff des Anspruchs 1.

Gurtförderer in Form von Steilbandförderern sind seit langem bekannt. Gemäß DE 19 22 636 wird eine zum Entladen von Schiffen vorgesehene Sauganlage vorgeschlagen, bei der eine als Rüssel ausgebildete Konstruktion mit innen liegendem Gerüst zwei mit einem Press-Rollen-System zusammenwirkende Fördergurte vorsieht, zwischen denen sich entsprechend des Transportvolumens ein Aufnahmeraum bildet. In JP 60/148806 wird eine Konstruktion vorgeschlagen, bei der das doppellagige Fördertrum in einer rinnen- bzw. röhrenförmigen Anlage aufgenommen ist, wobei über jeweilige deren Seitenwandungen durchgreifende Gestängeteile ein Andrücken von Andruckelementen an den Rückseiten der Fördergurte erfolgt. In JP 64/43407 sind in einer vertikalen Gestängekonstruktion jeweilige mit dem Fördertrum mitführbare Pressbaugruppen mit zentralen Rollen vorgesehen und eine Lösung gemäß JP 2/265807 sieht jeweilige Gruppen von Andruckrollen mit bis zu zehn Einzelteilen an jeder Rückseite der Fördergurte vor. In JP 4/55206 sind die Fördergurte von jeweils zwei nur einen Teilbereich der Gurtbreite erfassenden Press- und Abdichtrollen hintergriffen. Diese sind auf jeweiligen Federplatten gelagert, so dass in Querrichtung zumindest vier Presspaarungen erforderlich sind, um ein stabiles System zu erreichen. In JP 10/175713 sind auf jeder Rückseite der beiden Fördergurte zwei außenseitig schwenkbar gelagerte und zur Gurtmitte hin einen senkrecht zur Förderebene wirkenden Schubmechanismus aufweisende Anpressrollen vorgesehen, um damit durch Verschwenkungen auf den Volumenstrom im Aufnahmeraum reagieren zu können. In JP 10/226411 ist ein zentrales Press-System vorgesehen, das zwei auf einer Seite des Fördertrums vorgesehene Anpressrollen mit einer zentralen Gegenrolle aufweist. In WO 2007/131691 A1 wird ein Gurtförderer vorgeschlagen, bei dem jeweils paarweise an einer Rückseite der Fördergurte anlegbare Pressrollen mittels jeweiliger zentral zwischen den Pressrollen angeordneter Pressluftzylinder verlagerbar sind, wobei mit diesen Zylinder-Baugruppen ein nachteilig hoher technischer Aufwand verbunden ist.

Die Erfindung befasst sich mit dem Problem, einen Gurtförderer in Form eines Steilbandförderers zu schaffen, dessen für längenvariable Förderstrecken kostengünstig herstellbare Gestell- und Pressbaugruppen mit geringem technischem Aufwand für unterschiedliche Schüttgüter einsetzbar sind, dabei das Fördertrum schnell auf sich verändernde Förderbedingungen einstellbar ist und eine Einzeleinstellung der Pressbaugruppen nach deren Montage weitgehend entbehrlich wird.

Die Erfindung löst diese Aufgabe mit einem Gurtförderer mit den Merkmalen des Anspruchs 1. Weitere vorteilhafte Ausgestaltungen ergeben sich aus den Ansprüchen 2 bis 20.

Ausgehend von einer Vielzahl spezifischer Ausführungen bekannter Press- und Schließkonstruktionen an ein baukastenartiges Tragwerk-Konzept aufweisenden Steilbandförderern ist erfindungsgemäß vorgesehen, dass deren am Tragwerk mittels jeweiliger Tragbaugruppen gehaltene Press-Ausgleichs-Systeme zumindest im Bereich der zentralen Andruckrollen-Paarungen einfacher einstellbar und an Veränderungen des Transportgutes schneller anpassbar sind. Dazu ist ein unmittelbar mit der Tragvorrichtung zusammenwirkendes, deren jeweilige Funktionslage vorgebendes und mit geringem Raumbedarf in das Tragwerk integrierbares Stellorgan vorgeschlagen, so dass an den Fördergurten im Bereich des Fördertrums eine produktspezifisch variable Führung sowie eine gezielte Beeinflussung des Förderstroms möglich sind. Durch diese optimale Einstellbarkeit des Systems wird ein kontinuierlicher Förderprozess realisierbar und die Verschleißbelastungen der Systemteile sind minimiert.

Die den Aufnahmeraum vorgebenden Fördergurte sind an variable Füllzustände, -materialien und -bedingungen verbessert dadurch anpassbar, dass insbesondere an den zentralen Stütz- und Ausgleichsbaugruppen eine belastungsabhängig vorgebbare Stellbewegung möglich wird, wobei mit vergleichsweise wenigen Einzelteilen insgesamt eine bruchsichere und vor Überbelastungen geschützte Funktionseinheit innerhalb des Tragwerkes wirksam ist. Mit kostenoptimierten Gleichbauteilen im Bereich jeweiliger Pressteile und mit diesen verbundenen Stellorganen ist das baukastenartige Gesamtsystem darauf abgestellt, für einen denkbaren Austausch von Verschleißteilen den Montageaufwand zu verringern, so dass damit auch die Stillstandszeiten derartiger Steilbandförderer kostengünstig gesenkt sind.

Ausgehend von diesem Tragwerk mit baukastenartig stapelbaren Einzelteilen wird in den das Fördertrum aufnehmenden Innenraum ein Press-Feder-System integriert, das neben den randseitigen Schließrollen-Paarungen nur die eine zentrale Paarung von jeweiligen Andruckrollen zur Erfassung des Fördertrums aufweist. Mit Blick auf eine geringe Bauteilzahl der konzipierten Zentralrollen-Führung kann diese - bei vergleichsweise geringem Aufwand - mit einem Stellkonzept vervollständigt werden, dessen jeweilige steuer- bzw. regelbare Stellorgane weitgehend beliebig auch bei anderen Tragwerkausführungen einsetzbar sind, so dass Steilbandanlagen mit ähnlichen Transport- und Förderaufgaben optimal planbar sind. Dabei ist das System im Bereich der Tragvorrichtungen mit einem "Federschlauch"-Steller versehen, derart, dass ein an sich bekannter Schlauchkörper als ein einziges "Stellorgan" in das Tragwerk integriert werden kann und damit gleichzeitig sämtliche Tragvorrichtungen bzw. deren jeweiliges Andruckelement einstellbar sind.

Zur einstellbaren Halterung dieser funktionsrelevanten Tragvorrichtungen ist im Tragwerk ein Kassettenchassis mit spiegelsymmetrisch angeordneten Paaren von Vertikalträgern vorgesehen, an denen das Press-Ausgleichs-System mit den jeweiligen Andruckrollen variable Einbaulagen einnehmen kann und so das Fördertrum jeweils optimal erfasst wird. Dabei kann auch mittels einfacher, die Rollenanlage direkt beeinflussender Federelemente eine - an das zu transportierende Schüttgut angepasste - Vorspannung an den Rückseiten der beiden Fördergurte erzeugt werden. Auch diese an den Rollen erforderlichen Druck- bzw. Presskräfte können durch jeweilige mit Federelementen zusammenwirkende Stellorgane in Form des "Federschlauches" verändert werden, so dass auch wahlweise durch variable Federhärte bzw. veränderte Funktionslagen der Pressrollen im System eine schnelle Anpassung an kundenspezifisch variierende Einsatzbedingungen möglich ist.

Weitere Einzelheiten und vorteilhafte Ausgestaltungen ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine perspektivische Ausschnittsdarstellung eines in einem Tragwerk gehaltenen Gurtförderers mit einstellbaren Andruckelementen,
- Fig. 2: eine Draufsicht des Gurtförderers gemäß Fig. 1,
- Fig. 3: eine Draufsicht des Gurtförderers ähnlich Fig. 2 ohne Schüttgut zwischen den zwei Fördergurten,
- Fig. 4: eine Seitenansicht des Gurtförderers gemäß Fig. 1,
- Fig. 5: eine perspektivische Ausschnittsdarstellung des Tragwerkes mit Blick auf die Andruckelemente und einen außen liegend als Stellorgan vorgesehenen Schlauchkörper,
- Fig. 6: eine Ausschnittsdarstellung ähnlich Fig. 5 mit Lage veränderten Bauteilen bei einer Transportphase im Fördertrum,
- Fig. 7: eine vergrößerte Ausschnittsdarstellung einer die Andruckelemente aufnehmenden Tragvorrichtung im Nahbereich des Schlauchkörpers ähnlich Fig. 6,
- Fig. 8: eine Außenansicht der Bauteile gemäß Fig. 7,

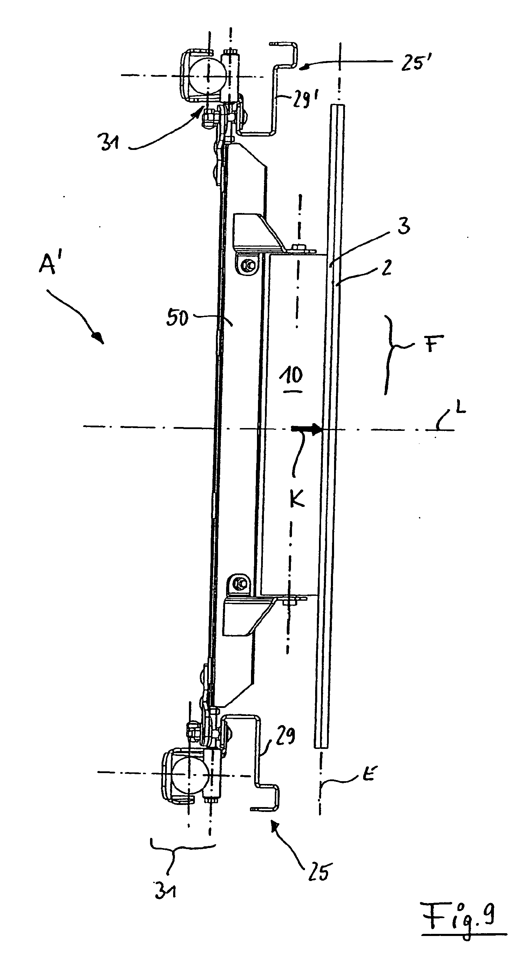

- Fig. 9: eine Draufsicht der die Andruckelemente aufweisenden Tragvorrichtung mit beidenends vorgesehenem Stellorgan,
- Fig. 10: eine Perspektivdarstellung der Tragvorrichtung gemäß Fig. 9 mit einer schematisch dargestellten Steuereinrichtung für die Schlauchkörper, und
- Fig. 11: eine Ausschnittsdarstellung der Tragvorrichtung mit Stellorgan in einer Seitenansicht ähnlich Fig. 8.

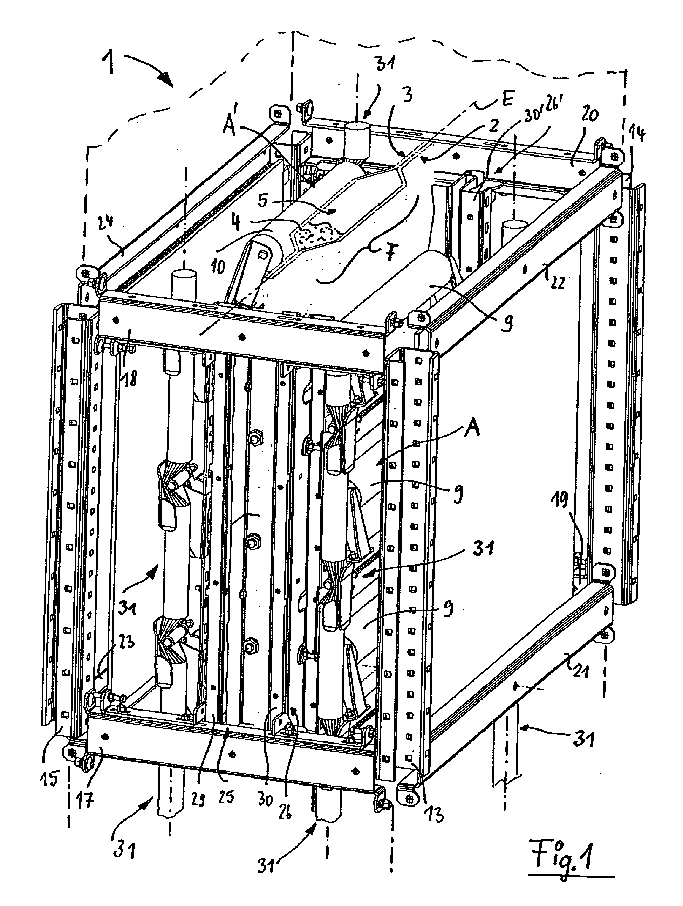

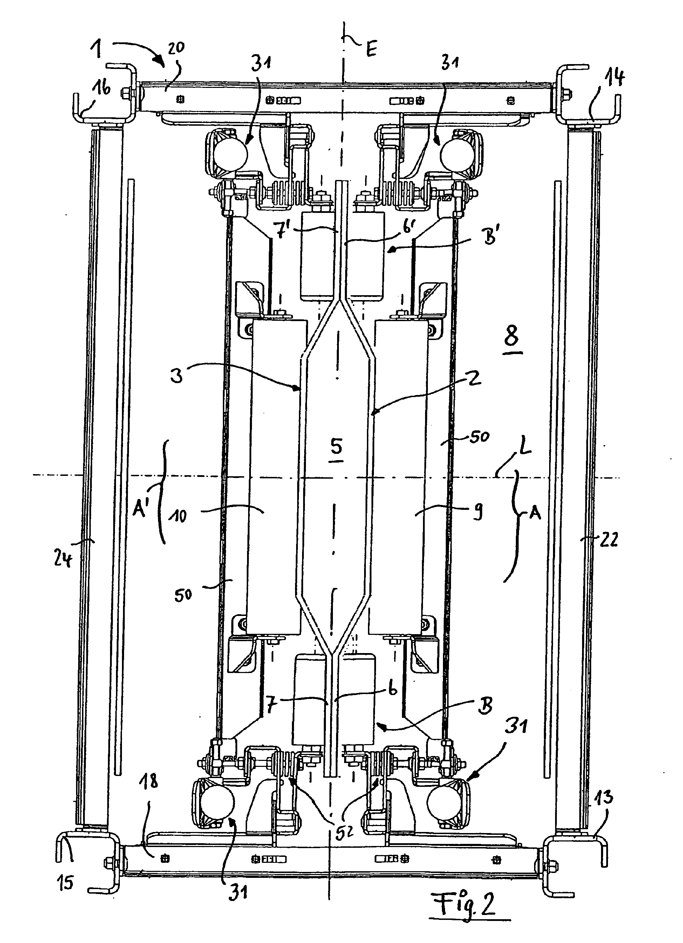

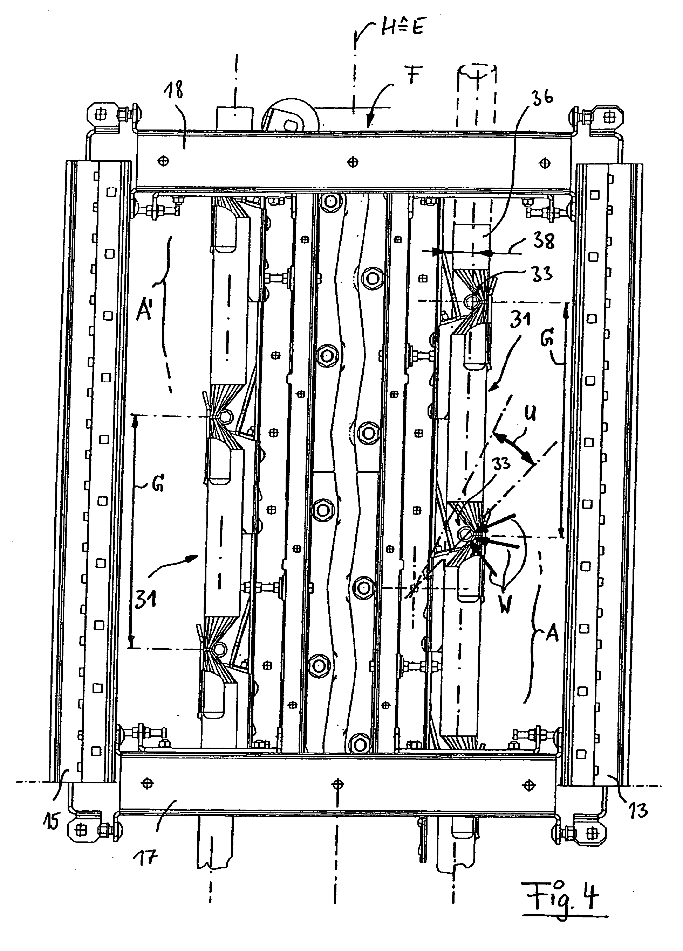

In Fig. 1 ist ausschnittsweise ein insgesamt mit 1 bezeichneter und eine vertikale Hochachse H (Fig. 4) definierender Gurtförderer in Form eines Steilbandförderers dargestellt. Bei derartigen Anlagen sind zwei zumindest phasenweise in einem Fördertrum F parallel zu einer Förderebene E verlaufende Fördergurte 2, 3 vorgesehen. Zwischen diesen Fördergurten 2, 3 wird während der dargestellten Förderphase zur vertikalen Mitnahme von vorzugsweise losem Schüttgut 4 ein Aufnahmeraum 5 gebildet, wobei in diesem zentralen Bereich des Fördertrums F an dessen jeweiligen Rück- bzw. Außenseiten anlegbare Andruckeinheiten A, A' vorgesehen sind. Gleichzeitig wirken die Fördergurte 2, 3 mit Schließelementen B, B' (Fig. 2) zusammen, mit denen die Randbereiche 6, 7 bzw. 6', 7' der Fördergurte 2, 3 aneinanderpressbar sind.

Gurtförderer dieser Art werden insbesondere für Transportsysteme eingesetzt, in denen auch Schüttgüter in Form von Ton, Kies o. dgl. einen hohen Feinkornanteil aufweisenden Rohstoffen zu fördern sind. Bekannt sind auch industrielle Anlagen in Modulbauweise, bei denen jeweilige Fördergurte 2, 3 mit einem Breiten-Maß von beispielsweise 500 mm bis 1600 mm einsetzbar sind und so ein großes Fördervolumen realisiert werden kann.

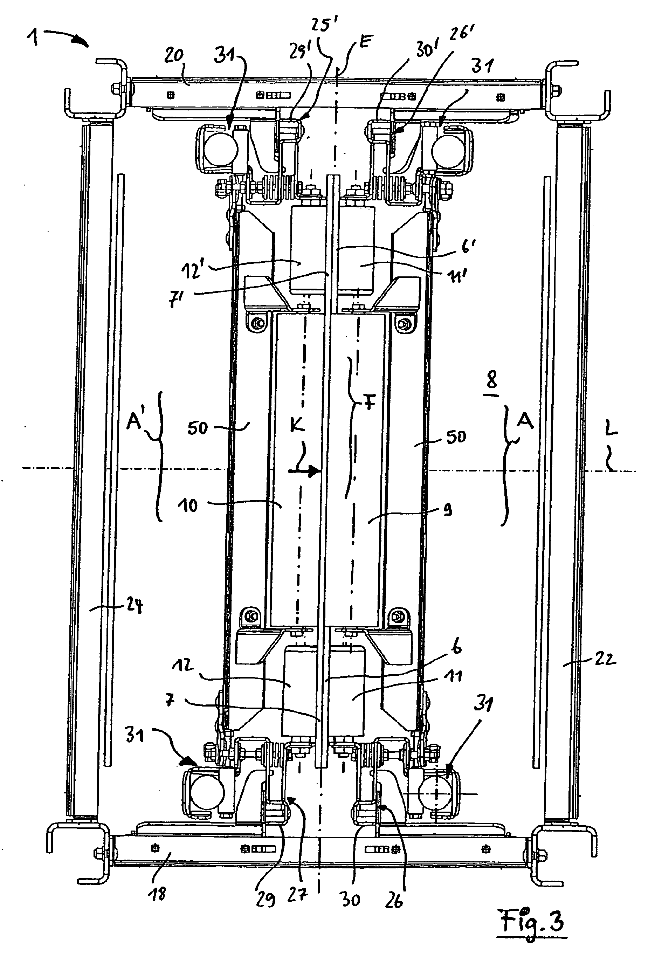

Der Gurtförderer 1 basiert dabei auf einem im wesentlichen geschlossenen Tragwerk, das in rahmenartiger Ausführung mit vier Eckpfosten 13, 14 sowie 15, 16 ausgebildet ist. Diesen sind paarweise übereinander jeweils Längsbalken 17, 18 sowie 19, 20 zugeordnet, wobei der Rahmen durch parallel zum innen liegenden Fördertrum F verlaufende Querbalken 21, 22 sowie 23, 24 geschlossen ist. An diesem geschlossenen Tragrahmen sind im Bereich der beiden gegenüberliegenden Paare von Längsbalken 17, 18 bzw. 19, 20 jeweils zwei Kassettenchassis 25, 26 bzw. 27, 28 in Form von spiegelsymmetrisch zur Förderebene E angeordneten Vertikalträgern 29, 30 bzw. 29', 30' vorgesehen. Damit bilden die beiden Kassettenchassis jeweilige funktionale Träger, an denen die wesentlichen Teile des Systems gehalten sind (Fig. 3).

Die Tragvorrichtungen A, A' sind dabei so aufgebaut, dass deren Andruckelemente 9, 10 (die in der dargestellten Ausführung in Form von Rollenpaarungen als zusammenwirkende Gegenglieder ausgeführt sind) rückseitig an die Fördergurte 2, 3 anpressbar sind. Für den seitlichen Verschluss des Aufnahmeraumes 5 (Fig. 2, Fig. 3) liegen an den Randbereichen 6, 7 bzw. 6', 7' jeweilige Schließelemente 11, 12 bzw. 11', 12' an. Diese gesamte Schließsystem ist zentral im Innenraum 8 der Gestellkonstruktion so angeordnet, dass sowohl in Querrichtung E als auch in Längsrichtung L ein im wesentlichen symmetrisch aufgebauter Modul gebildet ist.

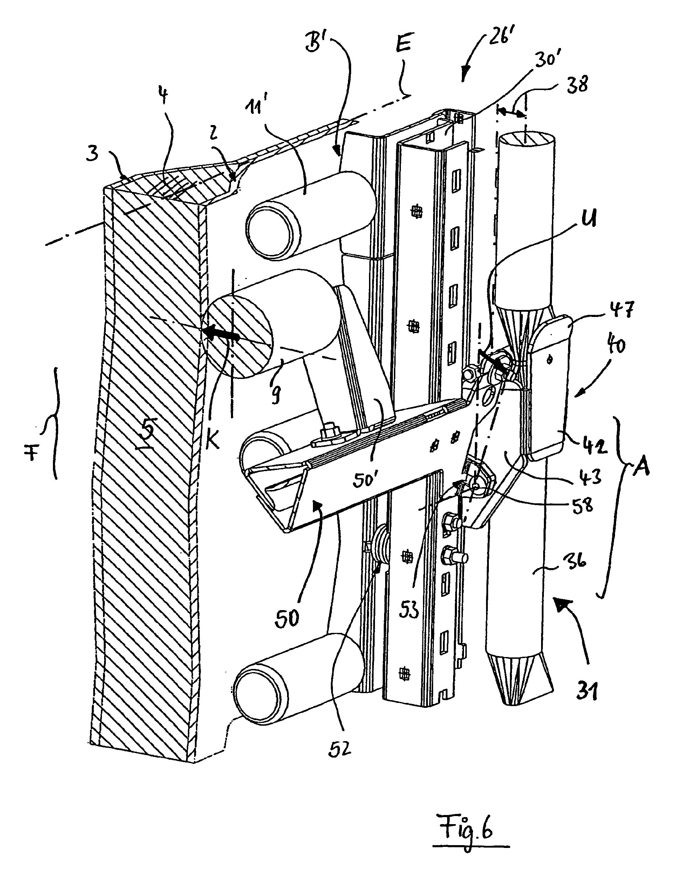

Ausgehend von einem Gurtförderer gemäß WO 2007/131691 A1, die einen den Innenraum 8 des Tragwerkes nachteilig einschränkenden Presszylinder aufweist, zeichnet sich der erfindungsgemäße Gurtförderer 1 dadurch aus, dass zumindest die auf einer Seite des Fördertrums F jeweils mit der Tragvorrichtung A, A' zusammenwirkenden Andruckelemente 9, 10 in ihrer deren Pressparameter (Pfeil K, Fig. 6) beeinflussenden Lage zur Förderebene E (bzw. Hochachse H) mit einfacheren Mitteln einstellbar sind. Dafür sind allgemein mit 31 bezeichnete Stellorgane vorgesehen, mit denen im Bereich der Tragvorrichtungen A, A' (bzw. der Schließelemente B, B'/nicht dargestellt) eine permanente Steuerung so möglich ist, dass mittels dieser in das System integrierten Stellorgane 31 die Press- und Förderbedingungen mit verringertem Aufwand veränderbar sind.

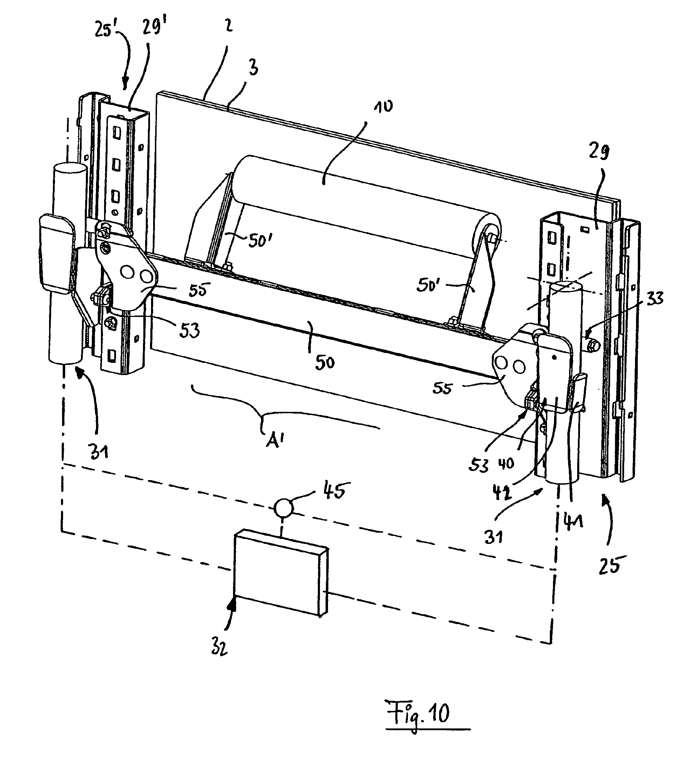

Dabei kann zur wahlweisen Beeinflussung der Stellorgane 31 ein Konzept realisiert sein, bei dem im Bereich einer Steuereinheit 32 (Fig. 10) die jeweiligen Parameter zur Steuerung eingestellt werden und so von der Bedienperson eine Systemanpassung erfolgt. Ebenso ist das neue Stellorgan 31 so ausgeführt, dass durch eine sensorische Erfassung (nicht dargestellt) von Pressparametern K, W eine Rückkopplung im Bereich der Steuereinheit 32 erfolgt und damit in deren Bereich eine automatische Regelung ausgeführt wird. Ebenso kann das System so erweitert sein, dass mittels einer eine entsprechende Software aufweisenden Datenverarbeitungsanlage die Steuerung bzw. die Regelung erfolgt.

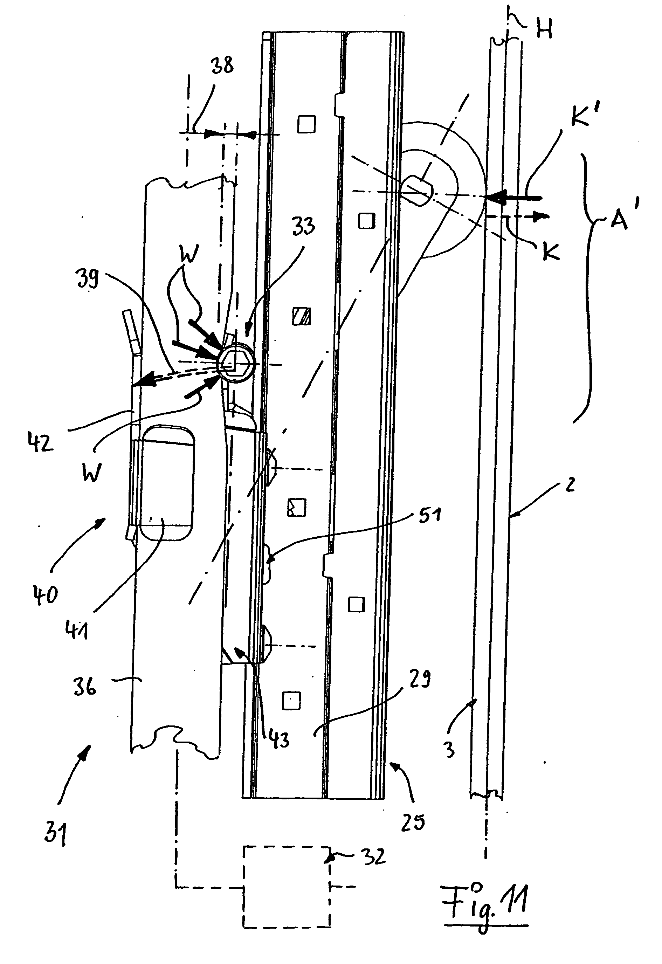

Aus einer Zusammenschau von Fig. 4 und Fig. 11 wird deutlich, dass die vom/am Stellorgan 31 vorgebbaren bzw. durch eine Rückkopplung mit der Steuereinheit 32 automatisch erfassten Pressparameter K, W auf ein mit dem jeweiligen Andruckelement 9, 10 bzw. der jeweiligen Tragvorrichtung A, A' verbindbares Stellglied 33 übertragen werden.

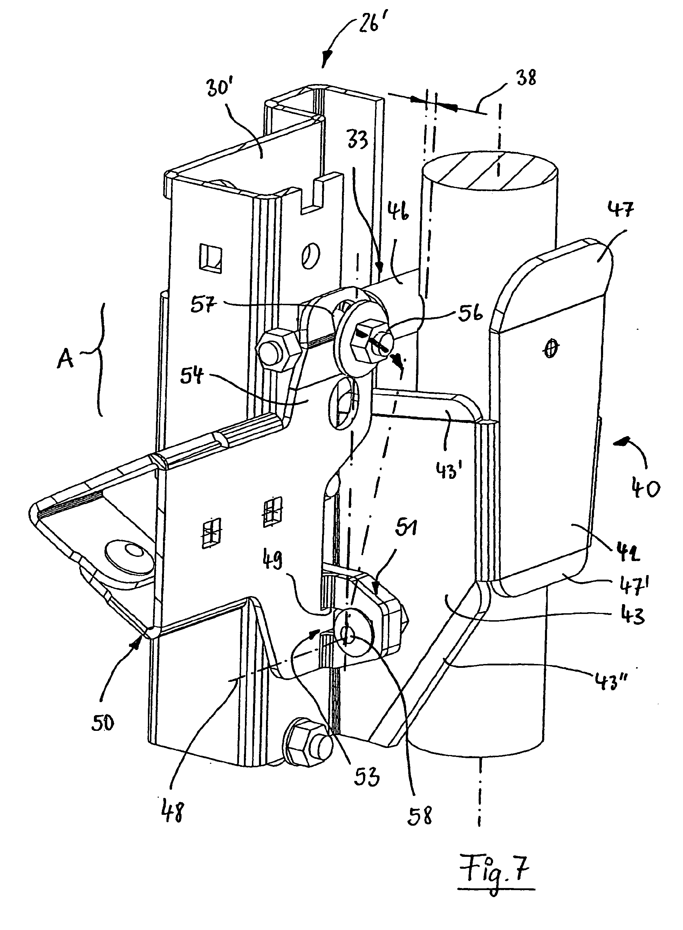

Für die Aufnahme von jeweiligen am Stellglied 33 der Stellorgane 31 vornehmbaren bzw. erfassbaren Einstellungen des Systems sind im Bereich der jeweiligen Kassettenchassis 25, 26, 25', 26' zu diesem hin mechanische Stütz- und Aufnahmebaugruppen vorgesehen. Dabei weisen die Tragvorrichtungen A, A' jeweils einen sich im wesentlichen horizontal zwischen den Vertikalstreben 29, 30 bzw. 29', 30' erstreckende Querträger 50 auf, an dem Tragarme 50' vorgesehen sind. Diese Teile sind mit den jeweiligen Andruckelementen 9, 10 verbunden, so dass eine nach Art einer Schwenkstütze wirksame Einheit (Schwenkbewegung gemäß Pfeil U, Fig. 6, Fig. 7) gebildet ist. Die zur Systemverstellung vorgesehenen Einstellungen mittels des Stellorgans 31 werden dabei mit den Bewegungs-Pfeilen U und W deutlich.

Aus den Übersichtsdarstellungen gemäß Fig. 1 bis 4 wird die weitgehend vollständige und raumsparende Integration des bzw. der Stellorgans(e) 31 in den modular aufgebauten Gurtförderer 1 deutlich, wobei beidseits des Fördertrums F die im wesentlichen spiegelsymmetrisch zur Ebene E verlaufenden Tragvorrichtungen A, A' mit der Schwenkstütze als das Andruckelement 9, 10 tragende Einheit vorgesehen sind. In zweckmäßiger Ausführung sind sämtliche der im Bereich des Fördertrums F angeordneten Tragvorrichtungen A, A' jeweils mit zumindest einem auf diese im Bereich der Schwenkstütze bzw. des Andruckelementes 9, 10 einwirkenden Stellorgan 31 versehen. In der vertikalen Übereinanderanordnung der Tragvorrichtungen A, A' (Fig. 1, Fig. 4) ist auch denkbar, dass nur eine entsprechend ausgewählte Anzahl der Tragvorrichtungen mit einem jeweiligen Stellorgan 31 versehen wird und damit "beeinflussbare" bzw. "nicht beeinflussbare" Zonen am Fördertrum F in Richtung der Hochachse H vorgegeben werden. Ebenso ist der jeweilige Abstand G der Tragvorrichtungen A, A' bzw. der mit diesem zusammenwirkenden Stellorgane 31 im System variabel vorgebbar.

Das vorbeschriebene Konzept des Gurtförderers 1 sieht insbesondere vor, dass sämtliche Stellorgane 31 der Tragvorrichtungen A, A' zentral mit der einen Steuer- und/oder Regeleinheit 32 verbunden sind. Daraus ergibt sich, dass die Pressparameter K, W, U an sämtlichen Andruckelementen 9, 10 bzw. Tragvorrichtungen gleichzeitig einstellbar bzw. regelbar sind.

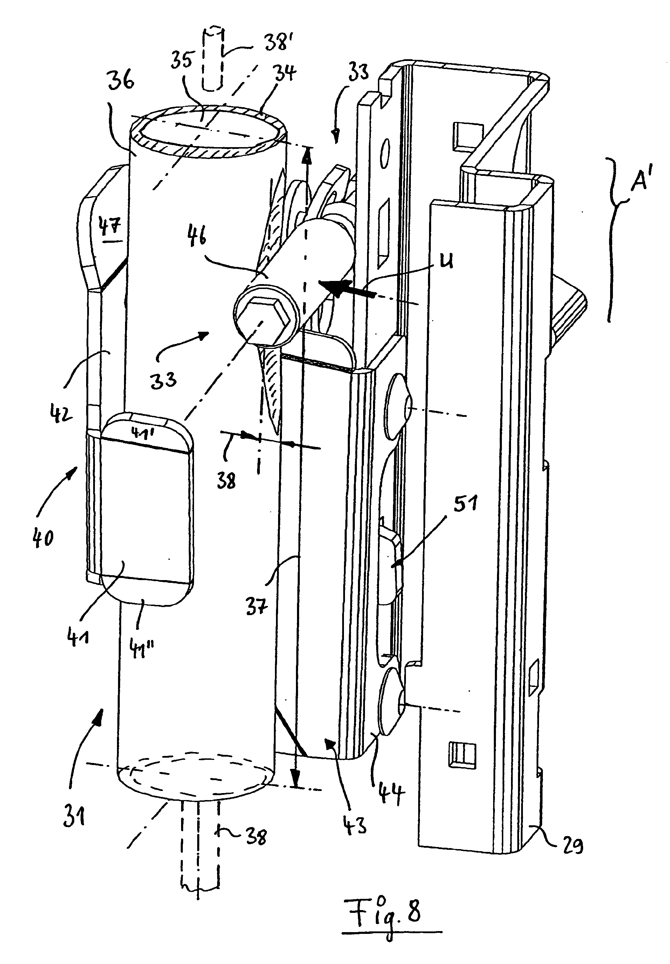

Für die effiziente Integration der allgemein mit 31 bezeichneten Stellorgane sieht das erfindungsgemäße Konzept vor, dass sämtliche Tragvorrichtungen A, A' bzw. Andruckelemente 9, 10 im Fördertrum F durch ein einziges, mit den jeweiligen Stellgliedern 33 zusammenwirkendes Stellorgan 31 einstellbar sind. Dazu ist das Stellorgan 31 (Fig. 8) in Form eines zumindest bereichsweise eine elastische Schlauchwandung 34 aufweisenden und im Innenraum 35 mit einem Fluid füllbaren Schlauchkörpers 36 ausgebildet.

Mit diesem Schlauchkörper-Konzept sind unterschiedliche Ausführungen von Stellorganen 31 realisierbar, wobei in Fig. 8 mit einer Bauteillänge 37 die Ausbildung eines Schlauchkörper-Abschnittes im Bereich des Stellgliedes 33 als denkbare Ausführung angedeutet ist. Hier wird zur Einleitung des Fluids in den Innenraum 35 des Schlauchkörpers 36 eine einen raumsparend geringen Durchmesser aufweisende Zuführleitung 38, 38' vorgesehen, und der Schlauchkörper 36 wird entsprechend dem Einsatzgebiet des Gurtförderers 1 optimiert.

In jedem Fall ist gewährleistet, dass der insbesondere mit Pressluft füllbare sowie in Abhängigkeit vom Füllvolumen bzw. -druck ein variierbares Federungsverhalten (Pfeil W, Fig. 11) im Bereich seiner Schlauchwandung 34 aufweisende Schlauchkörper 36 unmittelbar an den Stellgliedern 33 im Bereich der Tragvorrichtungen A, A' anlegbar ist. Mit dieser unmittelbaren Anlage im Bereich des Stellgliedes 33 wird erreicht, dass entsprechend eines im Bereich der Schlauchwandung 34 für das anliegende Stellglied 33 vorgebbaren Federweges 38 (Fig. 4, Fig. 8, Fig. 11) die Andruckelemente 9, 10 einstellbar sind. Damit wird deutlich, dass ein oder mehrere (in Hintereinanderlage angeordnete - nicht dargestellte -) Schlauchkörper 36 für das mit dem Andruckelement 9, 10 verbundene Stellglied 33 ein sich permanent an sich verändernde Außenkonturen der Fördergurte 2, 3 und/oder Pressparameter K im Bereich des Fördertrums F anpassendes Gegenlager bilden.

Dazu ist der Schlauchkörper 36 im Nahbereich des Stellgliedes 33 in einer einen U-förmigen Aufnahmeraum begrenzenden Stützklammer 40 gehalten. Diese weist eine seitliche Anlageplatte 41 und eine Basisplatte 42 auf, die andererseits mit einer am jeweiligen Vertikalträger 29 (Fig. 8) mittels eines Schenkelteils 44 gehaltenen Tragplatte 43 verbunden ist. Damit wird der Pressbereich des Schlauchkörpers 36 formschlüssig umgriffen und an der freien Seite des U-Profils der Stützklammer 40 liegt das als eine einstellbare Rolle 46 ausgebildete Stellglied 33 an. Bei einer Auslenkung der Schwenkstütze bzw. der Tragvorrichtung A, A' (in Pfeilrichtung U) muss der Schlauchkörper 36 zur Ausübung des am Fördertrum F vorgesehenen Gegendrucks K (Fig. 6, Fig. 11) mittels der Stützklammer 40 fixiert werden. Diese weist an den oberen und unteren Enden der Platte 41, 42, 43 jeweilige Abkantungen 41', 41", 43', 43" und 47, 47' auf, mit denen eine scharfkantige Belastung des Schlauchkörpers 36 vermieden ist. Um zusätzlich dessen Stauchung und/oder Quetschung zu vermeiden, ist die Stützklammer 40 nach oben konisch geformt, so dass der Schlauchkörper 36 in jeder Lage optimal in dem U-Profil aufgenommen ist.

Mit Blick auf den Gesamtaufbau des modularen Gurtförderers 1 in Fig. 1 bis Fig. 4 wird deutlich, dass sämtliche am Fördertrum F vorgesehene Tragvorrichtungen A, A' bzw. deren Stellglieder 33 mittels des - als einstückiges Bauteil - in den Gestellrahmen integrierbaren Schlauchkörpers 36 einstellbar ausgebildet sind. Es versteht sich, dass dieser durch sämtliche Stützklammern 40 geführte und zur Regulierung seines Innendrucks mit einem mit der Steuerungseinheit 32 verbundenen Pumpenaggregat 45 (Fig. 10) versehene Schlauchkörper 36 mit an sich bekannten Verbindungsstücken und Einzelteilen - die sämtlich nicht näher dargestellt sind - ein insgesamt geschlossenes Druckluft-System bildet. Die Steuerungseinheit 32 bzw. das Pumpenaggregat 45 wirken dabei insbesondere im Bereich eines Verteilerblockes sowie einer Wartungseinheit zusammen (nicht dargestellt).

Ebenso ist denkbar, dass ähnlich der in Fig. 8 mit der Länge 37 angedeuteten Ausführungen des "Teilschlauches" beidenends an jedem Querträger 50 der Tragvorrichtungen A, A' jeweils - einzeln oder gemeinsam einstellbare - "vertikale" Schlauchkörper 36 in Form von Teilabschnitten verlegt werden. Für eine zur Ebene E parallele Einstell-Bewegung der Andruckelemente 9, 10 der Tragvorrichtungen A, A' sind diese auf beiden Seiten des Fördertrums F mit jeweiligen die gemeinsame Steuerung 32 aufweisenden Schlauchkörpern 36 als Stellorgane 31 versehen.

In der dargestellten Ausführung des Gurtförderers 1 sind damit vier Schlauchkörper 36 erforderlich, die an ihrem jeweiligen unteren Ende mit Druckluft versorgt werden. Diese Schlauchkörper 36 werden an einen nicht näher dargestellten Druckbegrenzer geführt und hier angeschlossen, wobei dieser mit einer Wartungseinheit versehene Druckbegrenzer über einen mittels eines Schnellverschlusses angeschlossenen Druckluftschlauch gespeist ist. Damit kann je nach Konsistenz des Schüttgutes 4 der Anpressdruck K im Bereich der als "Rollenstationen" wirksamen Tragvorrichtungen A, A' variabel eingestellt werden, so dass eine schnelle Anpassung an die jeweilige Förderaufgabe möglich wird. Mittels des Druckbegrenzers wird die insbesondere von einem externen Drucklufterzeuger zugeführte Pressluft auf die vier einzelnen Schlauchkörper 36 aufgeteilt, wobei diese jeweils mit einem Absperrhahn versehen sind. Für den Fall, dass durch äußere Einflüsse einer der vier Schlauchkörper 36 beschädigt wird, ist diese defekte Pressluftleitung durch den Absperrhahn vom System trennbar. Da jede der Tragvorrichtungen A, A' mit zwei endseitigen Schlauchkörpern 36 eingestellt und damit die Vorspannung im Fördertrum F weitgehend variabel realisiert wird, kann das System auch nach dem Abschalten einer der Druckluftleitungen bzw. eines Schlauchkörpers weiter funktionieren. Damit ist die Betriebssicherheit auch im Falle einer denkbaren Havarie gewährleistet. Durch die Möglichkeit des Drucklosstellens eines der Schlauchkörper 36 im Bereich des Druckbegrenzers kann - auch während des Betriebes - die defekte Leitung einfach repariert bzw. der entsprechende Schlauchkörper 36 ausgewechselt werden.

Aus der Zusammenschau von Fig. 6 bzw. 8 und Fig. 11 wird das Konzept der jeweiligen Stellbewegungen K bzw. W und U deutlich, wobei sowohl das als Andruckrolle ausgebildete Andruckelement 9, 10 als auch das Stellglied 33 im Bereich der Tragvorrichtung A, A' fest mit dem Querträger 50 zu der biegesteifen Schwenkstütze verbunden sind. Daraus resultiert, dass das jeweilige Andruckelement 9, 10 insbesondere auf einer bogenförmigen Bahn 39 (Pfeil in Strichdarstellung, Fig. 11) verstellbar ist; prinzipiell wäre auch eine "geradlinige" Verlagerung gemäß Pfeil U (Fig. 6) denkbar. Aus den jeweiligen Phasen gemäß Fig. 11 (leeres Fördertrum F) und Fig. 6 (gefüllter Aufnahmeraum 5 im Fördertrum F) wird deutlich, dass aus der Volumenänderung des geförderten Schüttgutes 4 die Presskraft (gemäß Pfeil K', Fig. 11) resultiert und dabei die Bewegung in Pfeilrichtung U (bzw. Schwenk-Pfeil 39 in Fig. 11) ausführbar ist.

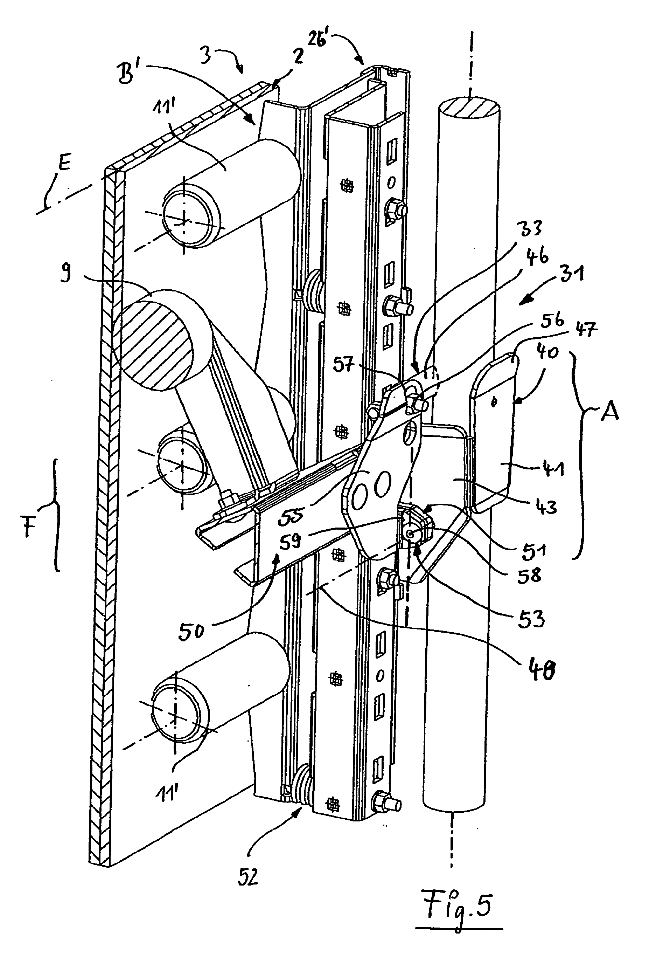

Durch eine Druckerhöhung im Innenraum des Schlauchkörpers 36 kann eine die Bewegung in Pfeilrichtung U (Federweg 38) einschränkende Gegenkraft erzeugt werden, mit der gleichzeitig der Druck gemäß Pfeil K im Bereich der Fördergurte 2, 3 beeinflusst wird. Damit ist ein insgesamt flexibel einsetzbares und für eine optimale Anpassung an das Schüttgut 4 entsprechend dimensionierbares System geschaffen. Die Tragvorrichtungen A, A' weisen in konstruktiv einfacher Ausführung im Bereich der Enden der Querträger 50 jeweils eine Schwenkachse 48 im Bereich einer Langlochführung 49 (Fig. 7) auf und dabei wird ein Halteansatz 51 lediglich in die jeweilige Vertikalstrebe 29 (Fig. 8) "eingehakt". Damit wird ein für die Bewegung gemäß Pfeil U erforderliches "Schwenklager" 53 definiert, in dessen Bereich die Verlagerungen der Andruckrollen 9, 10 besonders einfach und langzeitstabil kompensiert werden kann (Übergang von Fig. 5 nach Fig. 6).

Aus der Zusammenschau von Fig. 5 und Fig. 7 wird deutlich, dass der Querträger 50 im Nahbereich seines oberen Halteansatzes 54 mit einer Verbindungsplatte 55 versehen ist. Diese weist am oberen Ende ein von einer Stellschraube 56 der Rolle 46 durchgriffenes Langloch 57 auf. Am unteren Ende der Platte 55 ist ein die Führungsachse 58 des Schwenklagers 53 aufnehmender Führungsschenkel 59 vorgesehen, der die Langlochführung 49 (Fig. 7) abdeckt, wobei in deren Bereich ein Bewegungsbogen (gemäß Pfeil U) des Schwenksystems vorgesehen ist.

In einer weiteren Ausführungsform ist denkbar, dass im Bereich des Querträgers 50 zur Abstützung der Andruckelemente 9, 10 zusätzlich jeweilige Federelemente (nicht dargestellt) im Bereich der randseitigen Kassettenchassis 25, 26, 25', 26' vorgesehen sind, so dass ein Zusammenspiel von als Sicherungsteil wirkenden "steifen" Federelementen und federnden Schlauchkörpern 36 der Stellorgane 31 erreicht werden kann.

In der vorbeschriebenen Ausführungsform des Gurtförderers 1 ist das Konzept des federnden Schlauchkörpers 36 im Bereich der im Fördertrum F zentral angeordneten und gegenüberliegend vertikal versetzten Tragvorrichtungen A, A' beispielhaft beschrieben. Denkbar ist auch, dass die jeweiligen den randseitigen Bereich des Fördertrums F erfassenden Schließelemente 11, 12, 11', 12' (Fig. 2) mittels zumindest eines als Schlauchkörper 36 ausgebildeten Stellorgans an Stelle der bzw. gemeinsam mit den dargestellten Druckfedern 52 (Fig. 3) versehen werden könnten und damit dieser Bereich des Fördertrums F durch einstellbare Pressparameter verschließbar ist.

## Patentansprüche

1. Gurtförderer, insbesondere in Form eines Steilbandförderers, mit zwei zumindest phasenweise in einer Förderebene (E) als Fördertrum (F) parallel zueinander verlaufenden sowie in dieser Förderphase zur vertikalen Mitnahme von Schüttgut (4) einen Aufnahmeraum (5) bildenden Fördergurten (2, 3), wobei an deren in Bezug auf die mittlere Förderebene (E) äußeren Rückseiten jeweilige mittels einer Tragvorrichtung (A, A') an jeweiligen Tragteilen (29, 30, 29'. 30') gehaltene Andruck-und/oder Schließelemente (9, 10; 11, 12) in Form von Rollen-Paarungen o. dgl. Gegengliedern anpressbar sind, **dadurch gekennzeichnet, dass** zumindest die jeweils auf einer Seite des Fördertrums (F) auf Volumenänderungen des Aufnahmeraumes (5) reagierenden Andruckelemente (9, 10, 11, 12, 11', 12') einzeln in ihrer die jeweiligen Pressparameter (Pfeil K) beeinflussenden Lage zur Förderebene (E) einstellbar sind.

2. Gurtförderer nach Anspruch 1, **dadurch gekennzeichnet, dass** die auf das Fördertrum (F) als Einzelteile einwirkenden Andruckelemente (9, 10) jeweils mit im Bereich der Tragvorrichtungen (A, A') variable Pressparameter (K) vorgebenden Steilorganen (31) steuerbar sind.

3. Gurtförderer nach Anspruch 1 oder 2, **dadurch gekennzeichnet, dass** die jeweiligen Stellorgane (31) im Bereich der Tragvorrichtungen (A, A') mit einer automatischen Regelung verbunden sind.

4. Gurtförderer nach einem der Ansprüche 1 bis 3, **dadurch gekennzeichnet, dass** die vom/am Stellorgan (31) vorgebbaren bzw. durch eine Rückkopplung automatisch erfassten Pressparameter (K) auf ein mit dem jeweiligen Andruckelement (9, 10) bzw. der jeweiligen Tragvorrichtung (A, A') verbindbares Stellglied (33) übertragbar sind.

5. Gurtförderer nach einem der Ansprüche 1 bis 4, **dadurch gekennzeichnet, dass** die Tragvorrichtungen (A, A') jeweils einen sich im wesentlichen horizontal zwischen Vertikalstreben (29, 30, 29', 30') des Gestellrahmens erstreckenden Querträger (50) aufweise, dieser mit dem Andruckelement (9, 10) eine jeweilige Einheit nach Art einer Schwenkstütze bildet und diese ihrerseits mittels des Stellorgans (31) verlagerbar ist.

6. Gurtförderer nach einem der Ansprüche 1 bis 5, **dadurch gekennzeichnet, dass** beidseits des Fördertrums (F) im wesentlichen spiegelsymmetrisch zur Förderebene (E) angeordnete Tragvorrichtungen (A, A') mit der Schwenkstütze als das Andruckelement (9, 10) tragende Einheit vorgesehen sind.

7. Gurtförderer nach einem der Ansprüche 1 bis 6, **dadurch gekennzeichnet, dass** sämtliche der im Bereich des Fördertrums (F) angeordneten Tragvorrichtungen (A, A') jeweils mit zumindest einem auf diese im Bereich der Schwenkstütze bzw. des Andruckelements (9, 10) einwirkenden Stellorgan (31) versehen sind.

8. Gurtförderer nach einem der Ansprüche 1 bis 7, **dadurch gekennzeichnet, dass** sämtliche Stellorgane (31) der Tragvorrichtungen (A, A') mit einer zentralen Steuer-und/oder Regeleinheit (32) verbindbar sind.

9. Gurtförderer nach einem der Ansprüche 1 bis 8, **dadurch gekennzeichnet, dass** die Pressparameter (K) an sämtlichen Andruckelementen (9, 10) gleichzeitig einstellbar/regelbar sind.

10. Gurtförderer nach einem der Ansprüche 1 bis 9, **dadurch gekennzeichnet, dass** sämtliche Tragvorrichtungen (A, A') bzw. Andruckelemente (9, 10) zumindest des Fördertrums (F) durch ein einziges mit den jeweiligen Stellgliedern (33) zusammenwirkendes Stellorgan (31) einstellbar sind.

11. Gurtförderer nach einem der Ansprüche 1 bis 10, **dadurch gekennzeichnet, dass** das Stellorgan (31) in Form eines zumindest bereichsweise eine elastische Schlauchwandung (34) aufweisenden und im Innenraum (35) mit einem Fluid füllbaren Schlauchkörpers (36) ausgebildet ist.

12. Gurtförderer nach Anspruch 11, **dadurch gekennzeichnet, dass** der insbesondere mit Pressluft füllbare sowie in Abhängigkeit vom Füllvolumen bzw. -druck ein variierbares Federungsverhalten (Pfeil W) im Bereich seiner Schlauchwandung (34) aufweisende Schlauchkörper (36) unmittelbar an den Stellgliedern (33) im Bereich der Tragvorrichtungen (A, A') anlegbar ist.

13. Gurtförderer nach Anspruch 11 oder 12, **dadurch gekennzeichnet, dass** die Andruckelemente (9, 10) mittels eines im Bereich der Schlauchwandung (34) für das anliegende Stellglied (33) vorgebbaren Federungsweges (38) einstellbar sind.

14. Gurtförderer nach einem der Ansprüche 11 bis 13, **dadurch gekennzeichnet, dass** ein oder mehrere der Schlauchkörper (36) für das mit dem Andruckelement (9, 10) verbundene Stellglied (33) ein sich permanent an sich verändernde Außenkonturen und/oder Pressparameter (K) im Bereich des Fördertrums (F) anpassendes Gegenlager bildet(en).

15. Gurtförderer nach einem der Ansprüche 11 bis 14, **dadurch gekennzeichnet, dass** sämtliche am Fördertrum (F) vorgesehene Tragvorrichtungen (A, A') bzw. deren Stellglieder (33) mittels des als einstückiges Bauteil in den Gestellrahmen integrierbaren Schlauchkörpers (36) einstellbar sind.

16. Gurtförderer nach einem der Ansprüche 11 bis 15, **dadurch gekennzeichnet, dass** beidenends an jedem Querträger (50) der Tragvorrichtungen (A, A') jeweilige einzeln oder gemeinsam einstellbare Teilabschnitte des bzw. der Schlauchkörper(s) (36) vorgesehen sind.

17. Gurtförderer nach einem der Ansprüche 11 bis 16, **dadurch gekennzeichnet, dass** die Tragvorrichtungen (A, A') beider Seiten des Fördertrums (F) mit dem/den eine gemeinsame Steuerung (32) aufweisenden Schlauchkörper(n) (36) als Stellorgane (31) zusammenwirken.

18. Gurtförderer nach einem der Ansprüche 11 bis 17, **dadurch gekennzeichnet, dass** sowohl das als Andruckrolle ausgebildete Andruckelement (9, 10) als auch das Stellglied (33) im Bereich der Tragvorrichtung (A, A') fest mit dem Querträger (50) zu der Schwenkstütze verbunden sind, derart, dass das Andruckelement (9, 10) auf einer bogenförmigen Bahn (39) einstellbar ist.

19. Gurtförderer nach einem der Ansprüche 1 bis 10, **dadurch gekennzeichnet, dass** im Bereich des Querträgers (50) zur Abstützung der Andruckelemente (9, 10) zusätzlich jeweilige Federelemente vorgesehen sind und diese mit dem federnden Schlauchkörper (36) als Stellorgan zusammenwirken.

20. Gurtförderer mit einem Stellorgan nach einem oder mehreren der Ansprüche 1 bis 19, **dadurch gekennzeichnet, dass** jeweilige den randseitigen Bereich des Fördertrums (F) erfassende Schließelemente (11, 12, 11', 12') mittels zumindest eines als Schlauchkörper (36) ausgebildeten Stellorgans einstellbar sind.

## Claims

1. Belt conveyor, in particular in the form of an inclined belt conveyor, having two conveyor belts (2, 3) which, at least in phases, run parallel to one another in a conveyor plane (E) as the sides of the conveyor run (F) and, in this conveyor phase, form a receiving space (5) for carrying bulk material (4) vertically, wherein respective contact-pressure and/or closing elements (9, 10; 11, 12) in the form of roller pairs or similar counter members can be pressed against the outer rear sides of said conveyor belts referred to the central conveyor plane (E) by means of a carrier device (A, A') held on respective carrier parts (29, 30, 29', 30'), **characterized in that** at least the contact-pressure elements (9, 10, 11, 12, 11', 12') which react to volume changes of the receiving space (5) on one side of the conveyor run (F) can in each case be individually adjusted with regard to their position relative to the conveyor plane (E) which affects the respective contact-pressure parameters (arrow K).

2. The belt conveyor as claimed in claim 1, **characterized in that** that the contact-pressure elements (9, 10) which act on the conveyor run (F) as individual parts can in each case be controlled by means of control elements (31) which determine variable contact-pressure parameters (K) in the region of the carrier devices (A, A').

3. The belt conveyor as claimed in claim 1 or 2, **characterized in that** the respective control elements (31) in the region of the carrier devices (A, A') are connected to an automatic regulator.

4. The belt conveyor as claimed in one of claims 1 to 3, **characterized in that** the contact-pressure parameters (K) which can be determined by the control elements (31) or which are measured automatically by a feedback can be transmitted to an actuator (33) which can be connected to the respective contact-pressure elements (9, 10) or to the respective carrier device (A, A').

5. The belt conveyor as claimed in one of claims 1 to 4, **characterized in that** the carrier devices (A, A') in each case have a cross member (50) which extends substantially horizontally between vertical struts (29, 30, 29', 30') of the frame, this together with the contact-pressure element (9, 10) forms a unit in the manner of a swiveling support in each case, and this for its part can be displaced by means of the control element (31).

6. The belt conveyor as claimed in one of claims 1 to 5, **characterized in that** carrier devices (A, A'), which are arranged substantially mirror-symmetrically with respect to the conveyor plane (E), with the swiveling support as the unit carrying the contact-pressure element (9, 10) are provided on both sides of the conveyor run (F).

7. The belt conveyor as claimed in one of claims 1 to 6, **characterized in that** all the carrier devices (A, A') which are arranged in the region of the conveyor run (F) are in each case provided with at least one control element (31) which acts on said carrier devices in the region of the swiveling support or the contact-pressure element (9, 10).

8. The belt conveyor as claimed in one of claims 1 to 7, **characterized in that** all control elements (31) of the carrier devices (A, A') can be connected to a central control and/or regulator unit (32).

9. The belt conveyor as claimed in one of claims 1 to 8, **characterized in that** the contact-pressure parameters (K) can be simultaneously adjusted/regulated at all contact-pressure elements (9, 10).

10. The belt conveyor as claimed in one of claims 1 to 9, **characterized in that** all carrier devices (A, A') and contact-pressure elements (9, 10) at least of the conveyor run (F) can be adjusted by means of a single control element (31) which acts together with the respective actuators (33).

11. The belt conveyor as claimed in one of claims 1 to 10, **characterized in that** the control element (31) is designed in the form of a tube body (36) which, at least in places, has an elastic tube wall (34) and the interior (35) of which can be filled with a fluid.

12. The belt conveyor as claimed in claim 11, **characterized in that** the tube body (36), which can be filled in particular with compressed air and has a variable spring behavior (arrow W) in the region of its tube wall (34) which depends on the filling volume or pressure, can be placed directly against the actuators (33) in the region of the carrier devices (A, A').

13. The belt conveyor as claimed in claim 11 or 12, **characterized in that** the contact-pressure elements (9, 10) can be adjusted by means of a spring travel (38) which can be defined for the contacting actuator (33) in the region of the tube wall (34).

14. The belt conveyor as claimed in one of claims 11 to 13, **characterized in that** one or more of the tube bodies (36) for the actuator (33) connected to the contact-pressure element (9, 10) form(s) a counter bearing which continuously adapts itself to changing external contours and/or contact-pressure parameters (K) in the region of the conveyor run (F).

15. The belt conveyor as claimed in one of claims 11 to 14, **characterized in that** all carrier devices (A, A') or their actuators (33) provided on the conveyor run (F) can be adjusted by means of the tube body (36) which can be integrated into the frame as a single-piece component.

16. The belt conveyor as claimed in one of claims 11 to 15, **characterized in that**, in each case, individually or jointly adjustable sub-sections of the tube body or bodies (36) are provided at both ends of each cross member (50) of the carrier devices (A, A') .

17. The belt conveyor as claimed in one of claims 11 to 16, **characterized in that** the carrier devices (A, A') on both sides of the conveyor run (F) act together with the tube body or bodies (36), which have a common controller (32), as the control device (31).

18. The belt conveyor as claimed in one of claims 11 to 17, **characterized in that** the contact-pressure elements (9, 10) and the actuator (33) are securely connected to the swiveling support by means of the cross member (50) in the region of the carrier devices (A, A') in such a way that the contact-pressure element (9, 10) can be adjusted on a curved path (39).

19. The belt conveyor as claimed in one of claims 1 to 10, **characterized in that** spring elements are additionally provided in the region of the cross member (50) in each case to support the contact-pressure elements (9, 10) and these act together with the resilient tube body (36) as the control element.

20. A belt conveyor having a control element as claimed in one or more of claims 1 to 19, **characterized in that** closing elements (11, 12, 11', 12'), which in each case engage with the edge region of the conveyor run (F), can be adjusted by means of at least one control element designed in the form of a tube body (36).

## Revendications

1. Transporteur à courroies, en particulier sous la forme d'un transporteur à courroies inclinées, avec deux courroies de transport (2, 3) s'étendant au moins par phase parallèlement l'une à l'autre dans un plan de transport (E) comme brin de transport (F) ainsi que formant un espace de réception (5) dans cette phase de transport pour l'entraînement vertical de produit en vrac (4), des éléments de pressage et/ou de fermeture (9, 10 ; 11, 12) respectifs maintenus à l'aide d'un dispositif porteur (A, A') sur des parties porteuses respectives (29, 30, 29', 30') sous la forme de paires de rouleaux ou éléments antagonistes similaires pouvant être pressés contre leurs côtés arrière extérieurs par rapport au plan de transport (E) médian, **caractérisé en ce que** la position, influant sur les paramètres de pressage respectifs (flèche K) par rapport au plan de transport (E), d'au moins les éléments de pressage (9, 10, 11, 12, 11', 12') réagissant respectivement sur un côté du brin de transport (F) à des modifications de volume de l'espace de réception (5) peut être réglée individuellement.

2. Transporteur à courroies selon la revendication 1, **caractérisé en ce que** les éléments de pressage (9, 10) agissant sur le brin de transport (F) comme parties individuelles peuvent être commandés respectivement avec des organes de réglage (31) prescrivant des paramètres de pressage (K) variables dans la zone des dispositifs porteurs (A, A').

3. Transporteur à courroies selon la revendication 1 ou 2, **caractérisé en ce que** les organes de réglage respectifs (31) sont reliés dans la zone des dispositifs porteurs (A, A') à une régulation automatique.

4. Transporteur à courroies selon l'une quelconque des revendications 1 à 3, **caractérisé en ce que** les paramètres de pressage (K) détectés automatiquement par un rétrocouplage ou prescriptibles par/sur l'organe de réglage (31) peuvent être transmis à un organe de réglage (33) pouvant être relié à l'élément de pressage (9, 10) respectif ou au dispositif porteur respectif (A, A').

5. Transporteur à courroies selon l'une quelconque des revendications 1 à 4, **caractérisé en ce que** les dispositifs porteurs (A, A') présentent respectivement une traverse (50) s'étendant sensiblement horizontalement entre des entretoises verticales (29, 30, 29', 30') du bâti, laquelle forme avec l'élément de pressage (9, 10) une unité respective comme un appui pivotant et celle-ci peut être déplacée de son côté à l'aide de l'organe de réglage (31).

6. Transporteur à courroies selon l'une quelconque des revendications 1 à 5, **caractérisé en ce que** des dispositifs porteurs (A, A') disposés de part et d'autre du brin de transport (F) sensiblement symétriquement par rapport au plan de transport (E) sont prévus avec l'appui pivotant sous la forme d'une unité portant l'élément de pressage (9, 10).

7. Transporteur à courroies selon l'une quelconque des revendications 1 à 6, **caractérisé en ce que** tous les dispositifs porteurs (A, A') disposés dans la zone du brin de transport (F) sont pourvus respectivement d'au moins un organe de réglage (31) agissant sur ceux-ci dans la zone de l'appui pivotant ou de l'élément de pressage (9, 10).

8. Transporteur à courroies selon l'une quelconque des revendications 1 à 7, **caractérisé en ce que** tous les organes de réglage (31) des dispositifs porteurs (A, A') peuvent être reliés à une unité de commande et/ou de régulation centrale (32).

9. Transporteur à courroies selon l'une quelconque des revendications 1 à 8, **caractérisé en ce que** les paramètres de pressage (K) sont réglables/régulables simultanément sur tous les éléments de pressage (9, 10) .

10. Transporteur à courroies selon l'une quelconque des revendications 1 à 9, **caractérisé en ce que** tous les dispositifs porteurs (A, A') ou éléments de pressage (9, 10) au moins du brin de transport (F) sont réglables par un seul organe de réglage (31) coagissant avec les organes de réglage (33) respectifs.

11. Transporteur à courroies selon l'une quelconque des revendications 1 à 10, **caractérisé en ce que** l'organe de réglage (31) est réalisé sous la forme d'un corps de tuyau (36) présentant au moins par endroits une paroi de tuyau (34) élastique et pouvant être remplie en un fluide dans l'espace intérieur (35).

12. Transporteur à courroies selon la revendication 11, **caractérisé en ce que** le corps de tuyau (36) pouvant être rempli en air comprimé ainsi que présentant en fonction du volume ou de la pression de remplissage un comportement élastique variable (flèche W) dans la zone de sa paroi de tuyau (34) peut être directement placé sur les organes de réglage (33) dans la zone des dispositifs porteurs (A, A').

13. Transporteur à courroies selon la revendication 11 ou 12, **caractérisé en ce que** les éléments de pressage (9, 10) sont réglables à l'aide d'une course élastique (38) prescriptible dans la zone de la paroi de tuyau (34) pour l'organe de réglage (33) adjacent.

14. Transporteur à courroies selon l'une quelconque des revendications 11 à 13, **caractérisé en ce qu'**un ou plusieurs des corps de tuyau (36) pour l'organe de réglage (33) relié à l'élément de pressage (9, 10) forme(nt) une butée s'adaptant en permanence à des contours extérieurs et/ou des paramètres de pressage (K) se modifiant dans la zone du brin de transport (F).

15. Transporteur à courroies selon l'une quelconque des revendications 11 à 14, **caractérisé en ce que** tous les dispositifs porteurs (A, A') prévus sur le brin de transport (F) ou leurs organes de réglage (33) sont réglables à l'aide du corps de tuyau (36) intégrable comme un composant d'un seul tenant dans le bâti.

16. Transporteur à courroies selon l'une quelconque des revendications 11 à 15, **caractérisé en ce que** des sections partielles respectives réglables individuellement ou ensemble du ou des corps de tuyau (36) sont prévues sur les deux extrémités de chaque traverse (50) des dispositifs porteurs (A, A').

17. Transporteur à courroies selon l'une quelconque des revendications 11 à 16, **caractérisé en ce que** les dispositifs porteurs (A, A') des deux côtés du brin de transport (F) coagissent avec le(s) corps de tuyau (36) présentant une commande commune (32) comme organes de réglage (31).

18. Transporteur à courroies selon l'une quelconque des revendications 11 à 17, **caractérisé en ce que** non seulement l'élément de pressage (9, 10) réalisé comme un rouleau de pressage mais aussi l'organe de réglage (33) dans la zone du dispositif porteur (A, A') sont reliés fixement à la traverse (50) pour former l'appui pivotant de telle manière que l'élément de pressage (9, 10) puisse être réglé sur une bande arquée (39).

19. Transporteur à courroies selon l'une quelconque des revendications 1 à 10, **caractérisé en ce que** des éléments de ressort respectifs sont en outre prévus dans la zone de la traverse (50) pour l'appui des éléments de pressage (9, 10) et ceux-ci coagissent avec le corps de tuyau (36) à ressort comme organe de réglage.

20. Transporteur à courroies avec un organe de réglage selon l'une ou plusieurs quelconques des revendications 1 à 19, **caractérisé en ce que** des éléments de fermeture (11, 12, 11', 12') respectifs détectant la zone côté bord du brin de transport (F) sont réglables à l'aide d'au moins un organe de réglage réalisé comme corps de tuyau (36).
